# EUROPEAN PATENT APPLICATION

(11) **EP 4 806 846 A1**
(43) Date of publication of application: **16.09.2026**
(21) Application number: 26157494.1
(22) Date of filing: 10.02.2026
(51) Int. Cl.: C01G 53/42, C01G 53/84, H01M 4/505, H01M 4/525

(54) **CATHODE ACTIVE MATERIAL, CATHODE MIXTURE, BATTERY, AND METHOD FOR PRODUCING CATHODE ACTIVE MATERIAL**

(30) Priority: 18.02.2025 JP 2025024224
(71) Applicant: Toyota Jidosha Kabushiki Kaisha, Toyota-shi, Aichi-ken 471-8571 (JP)
(72) Inventor: OHSAWA, Ryosuke, Toyota-shi, 471-8571 (JP); PROCTER, Momoko, Toyota-shi, 471-8571 (JP); MAHARA, Yuji, Toyota-shi, 471-8571 (JP); KINOSHITA, Taku, Toyota-shi, 471-8571 (JP)
(74) Representative: Kuhnen & Wacker Patent- und Rechtsanwaltsbüro PartG mbB

(57) **Abstract**

A main object of the present disclosure is to provide a cathode active material with which the increase in resistance due to charge and discharge can be suppressed. The present disclosure achieves the object by providing a cathode active material including: a crystalline primary particle containing Li, TM, which is a transition metal, and O, wherein the cathode active material is an aggregate configured by a plurality of the primary particle; an average particle size of the primary particle in the aggregate is 0.5 µm or more; and in a pore diameter distribution obtained by a mercury press-in method, a peak is present in a range of 65 nm or more and 300 nm or less.

## Description

### Technical Field

The present disclosure relates to a cathode active material, a cathode mixture, a battery, and a method for producing the cathode active material.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. As a cathode active material used for a battery, an active material including a transition metal such as Ni, Co, and Mn has been known.

For example, Patent Literature 1 discloses a cathode active material for all solid lithium ion battery, wherein, in an accumulation pore distribution curve obtained by a mercury press-in method, a pore diameter (D75) at the time of 25% accumulation viewed from the minute pore diameter side is 7 µm or less. Also, Patent Literature 2 discloses a cathode active material for lithium secondary battery, wherein, in a pore distribution obtained by a mercury press-in method, a pore peak is present in a range where the pore radius is 10 nm or more and 200 nm or less. Further, Patent Literature 3 discloses a lithium composite oxide particle including a sub-peak, wherein, in a measurement by a mercury press-in method, a peak top is present in a range where the pore radius is 80 nm or more and 300 nm or less. Furthermore, Patent Literature 4 discloses a porous metal oxide-based electrochemical energy storing material.

### Citation List

### Patent Literatures

Patent Literature 1: Japanese Patent Application Laid-Open (JP-A) No. 2021-114411
Patent Literature 2: JP-A No. 2018-174106
Patent Literature 3: JP-A No. 2005-123179
Patent Literature 4: JP-A No. 2022-537567

### Summary of Disclosure

### Technical Problem

From the view point of improving performance of a battery, it has been required to suppress the increase of resistance along with charge and discharge. A main object of the present disclosure is to provide a cathode active material with which the increase in resistance due to charge and discharge can be suppressed.

### Solution to Problem

[1] A cathode active material comprising:
   a crystalline primary particle containing Li, TM, which is a transition metal, and O, wherein
   the cathode active material is an aggregate configured by a plurality of the primary particle;
   an average particle size of the primary particle in the aggregate is 0.5 µm or more; and
   in a pore diameter distribution obtained by a mercury press-in method, a peak is present in a range of 65 nm or more and 300 nm or less.
[2] The cathode active material according to [1], wherein the peak is present in a range of 90 nm or more and 220 nm or less in the pore diameter distribution.
[3] The cathode active material according to [1] or [2], wherein a pore amount in the peak is 0.010 mL/g or more.
[4] The cathode active material according to any one of [1] to [3], wherein a pore amount in the peak is 0.025 mL/g or more.
[5] The cathode active material according to any one of [1] to [4], wherein the primary particle includes at least Ni as the TM.
[6] The cathode active material according to [5], wherein, when the TM is 1 part by mol, a ratio of the Ni is 0.50 parts by mol or more.
[7] The cathode active material according to [5], wherein, when the TM is 1 part by mol, a ratio of the Ni is 0.90 parts by mol or more.
[8] The cathode active material according to any one of [1] to [7], wherein the primary particle contains at least one kind of Co and Mn as the TM.
[9] The cathode active material according to any one of [1] to [8], wherein the primary particle includes a layered rock salt type crystal structure.
[10] A cathode mixture comprising the cathode active material according to any one of [1] to [9].
[11] A battery comprising a cathode active material layer containing a cathode active material, an anode active material layer containing an anode active material, and an electrolyte layer arranged between the cathode active material layer and the anode active material layer, wherein
   the cathode active material layer contains the cathode mixture according to [10].
[12] A method for producing the cathode active material according to any one of [1] to [9], the method comprising:
   a burning step of burning a mixture containing a transition metal hydroxide containing the TM, a Li source, and lithium hydroxide that is a molten salt, to obtain a burned substance, and
   a crushing step of crushing the burned substance, wherein
   in the mixture, a molar ratio of Li in the molten salt to the TM is 0.1 or more and less than 0.6.
[13] The method for producing the cathode active material according to [12], wherein
   the Li source is lithium hydroxide; and
   a molar ratio of Li in the Li source to the TM in the mixture is 1.0.
[14] The method for producing the cathode active material according to [12] or [13], further comprising a granulating step of granulating a crushed product of the burned substance after the crushing step.

### Advantageous Effects of Disclosure

The present disclosure exhibits an effect of providing a cathode active material with which the increases of resistance due to charge and discharge can be suppressed.

### Brief Description of Drawings

FIG. 1 is a schematic cross-sectional view exemplifying the cathode active material in the present disclosure.
FIGS. 2A and 2B are schematic cross-sectional views exemplifying the conventional cathode active material.
FIG. 3 is a schematic cross-sectional view exemplifying the battery in the present disclosure.
FIG. 4 is a flow chart exemplifying the method for producing the cathode active material in the present disclosure.
FIG. 5 is the measurement result of a mercury press-in method to the cathode active materials obtained in Examples 1 to 4 and Comparative Examples 1 and 2.
FIG. 6 is the result of capacity durability of the batteries obtained in Example 1 and Comparative Examples 1 and 2.

### Description of Embodiments

Embodiments will be explained below with reference to drawings. However, the present disclosure is enforceable in a variety of different forms, and thus should not be taken as is limited to the contents described in the embodiments exemplified as below. Also, the drawings may show width, thickness, and shape of each part schematically comparing to the actual form in order to explain more clearly in some cases; however, it is merely an example, and thus does not limit the interpretation.

### A. Cathode active material

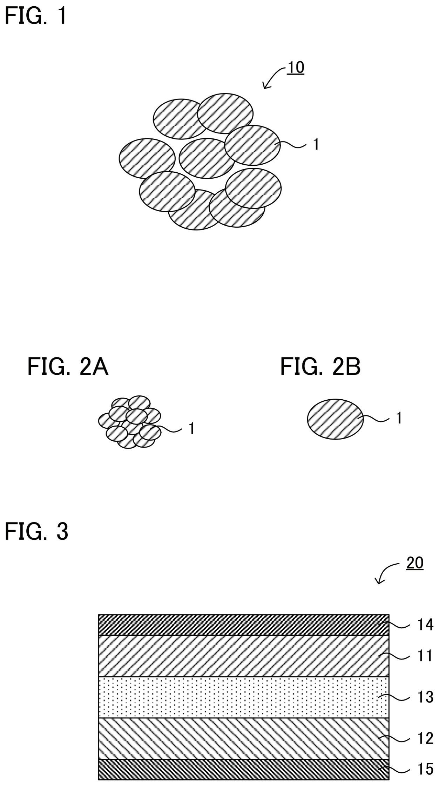

FIG. 1 is a schematic cross-sectional view exemplifying the cathode active material in the present disclosure. As shown in FIG. 1, cathode active material 10 includes crystalline primary particle 1 containing Li, TM, which is a transition metal, and O. Also, the cathode active material 10 is an aggregate configured by a plurality of the primary particle 1. An average particle size of the primary particle 1 in the aggregate is 0.5 µm or more. Also, in a pore diameter distribution obtained by a mercury press-in method, a peak is present in a range of 65 nm or more and 300 nm or less.

According to the present disclosure, since the average particle size of the primary particle in the aggregate is large, and the peak is present in the specified range in the pore diameter distribution, the cathode active material can suppress the increase in resistance due to charge and discharge. As a cathode active material, a polycrystalline active material and a single crystalline active material have been conventionally known. For example, as shown in FIG. 2A, in the polycrystalline active material, a plurality of the primary particle 1 (extremely minute primary particle 1) is usually packed in a dense state. The production of the polycrystalline active material is comparatively easy, but the resistance increase over time easily occurs. This is because cracks are generated in the polycrystal by repeating charging and discharging, and resistant component is formed when a new surface generated by the cracks reacts with an electrolyte.

Meanwhile, as shown in FIG. 2B, in the single crystalline active material, the primary particle 1 with large particle diameter does not aggregate, and is present as one independent particle. In the single crystalline active material, cracks are not easily caused by repeating charging and discharging compared to the polycrystalline active material. For this reason, it is advantageous in suppressing the resistance increase over time due to the new surface reacting with the electrolyte. Meanwhile, the single crystalline active material has larger specific surface area compared to the polycrystalline active material, and thus the resistant component is accumulated by repeating charging and discharging, and the resistance increase over time easily occurs.

Thus, although the reasons are different, there is a problem that resistance increase over time is likely to occur whether a polycrystalline active material or a single crystalline active material is used. In contrast, in the present disclosure, an aggregate is configured by a primary particle (primary particle close to single crystal) with large particle size. This provides advantages over polycrystalline active materials, such as less cracking even after repeated charge and discharge. Further, the specific surface area of the aggregate can be made smaller compared to that of the single crystalline active material. As a result, the accumulation of the resistant component by repeating charging and discharging can be inhibited. In this manner, since the cathode active material in the present disclosure is an aggregate in which primary particles (conventional single crystalline active material) with large particle size are appropriately aggregated, the increase in resistance due to charge and discharge can be suppressed.

In the present disclosure, the level of the aggregation of the primary particle is specified by the pore diameter distribution obtained by a mercury press-in method. In specific, it is specified that, in the pore diameter distribution, a peak is present in a range of 65 nm or more and 300 nm or less. In other words, as shown in FIG. 1, it is specified that the minute void (void having a pore diameter of 65 nm or more and 300 nm or less) is present inside the aggregate of the primary particle 1. When the minute void is present, particularly when a liquid electrolyte is used, effect such that ion conductivity inside the aggregate improves can also be obtained. Also, when the aggregation of the primary particles is in a dense state, the peak position in the pore diameter distribution is shifted to the low pore diameter side. Also, in the general single crystalline active material, the primary particle with large particle diameter does not aggregate, and is present as one independent particle, thus, usually there is no minute void.

As described above, Patent Literature 2 discloses a cathode active material for lithium secondary battery, wherein, in a pore distribution obtained by a mercury press-in method, a pore peak is present in a range where the pore radius is 10 nm or more and 200 nm or less. Further, Patent Literature 3 discloses a lithium composite oxide particle including a sub-peak, wherein, in a measurement by a mercury press-in method, a peak top is present in a range where the pore radius is 80 nm or more and 300 nm or less. However, Patent Literatures 2 and 3 neither describe nor suggest about the average particle size of the primary particle in the aggregate. Also, in Examples of Patent Literature 2, since a lithium carbonate is used as a Li source, and the later described molten salt is not used, it is presumed that the polycrystalline active material is obtained. Also, in Examples of Patent Literature 3, although LiOH is used as a lithium carbonate as a Li source, the use amount of LiOH is almost a stoichiometric ratio. Moreover, since the primary particle does not sufficiently grow with the burning conditions of 950°C and 12 hours,, it is presumed that the polycrystalline active material is obtained. In other words, Patent Literature 2 and Patent Literature 3 are based on the premise of using the polycrystalline active material, and thus there is no motivation for the one to produce the cathode active material in the present disclosure.

### 1. Primary particle

The primary particle in the present disclosure is a crystalline particle containing Li, TM, which is a transition metal, and O. Examples of the crystal structure of the primary particle may include a layered rock salt type and a spinel type, and the layered rock salt type is preferable. Also, the primary particle may include a crystal structure belonging to a space group R-3m.

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and W.

The primary particle preferably contains at least Ni. The reason therefor is to obtain a cathode active material with excellent capacity properties. The ratio of Ni included in the primary particle when all the transition metals (TM) included in the primary particle is 1 part by mol is, for example, 0.25 parts by mol or more, may be 0.33 parts by mol or more, may be 0.50 parts by mol or more, may be 0.75 parts by mol or more, may be 0.80 parts by mol or more, and may be 0.90 parts by mol or more. The capacity properties improve when the ratio of Ni is increased.

The primary particle may or may not contain Co. The ratio of Co included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Co included in the primary particle is, for example, 0.40 parts by mol or less, and may be 0.20 parts by mol or less.

The primary particle may or may not contain Mn. The ratio of Mn included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Mn included in the primary particle is, for example, 0.40 parts by mol or less, and may be 0.20 parts by mol or less.

The primary particle preferably contains at least one kind of Ni, Co, and Mn. The total ratio of Ni, Co, and Mn included in the primary particle when all the transition metals (TM) included in the primary particle is 1 part by mol is, for example, 0.80 parts by mol or more, may be 0.90 parts by mol or more, and may be 0.95 parts by mol or more. Incidentally, "the total of Ni, Co, and Mn" includes the case where the ratio of one kind or two kinds of Ni, Co, and Mn is 0.

The primary particle may contain other metal M¹ (including semimetal) other than Li and the TM, in addition to Li and the TM. Examples of the other metal M¹ may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, but it may be a composition represented by a general formula LiₓNaₐCo_{b}Mn_{c}O_{y}, in which 0.1 ≤ x ≤ 1.5, 0.5 ≤ a ≤ 1.0, 0 ≤ b ≤ 0.3, 0 ≤ c ≤ 0.3, a+b+c = 1.0, and 1.5 ≤ y ≤ 2.1.

The "x" may be 0.4 or more, 0.6 or more, 0.8 or more, 1.0 or more, or 1.05 or more, and may be 1.4 or less, or 1.2 or less.

The "y" may be 1.6 or more, 1.7 or more, 1.8 or more, or 1.9 or more, and may be 2.0 or less.

The "a" may be 0.6 or more, 0.7 or more, 0.8 or more, or 0.85 or more, and may be 0.9 or less.

The "b" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

The "c" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

### 2. Aggregate

The cathode active material in the present disclosure is an aggregate configured by a plurality of the primary particle. As shown in FIG. 1, the cathode active material 10 is configured by a plurality of the primary particle 1.

The average particle size of the primary particle in the aggregate is, usually 0.5 µm or more, may be 0.6 µm or more, may be 0.8 µm or more, may be 1 µm or more, may be 2 µm or more, and may be 5 µm or more. Meanwhile, the average particle size of the primary particle in the aggregate is, for example, 20 µm or less, may be 15 µm or less, and may be 10 µm or less. The average particle size of the primary particle (cathode active material) can be obtained by, for example, a SEM cross-section observation.

The number of the primary particle configuring the aggregate is, usually 2 or more, may be 5 or more, and may be 10 or more. Meanwhile, the number of the primary particle configuring the aggregate is, for example, 100 or less. Also, the average particle size of the aggregate is, for example, larger than 0.5 µm and 30 µm or less, may be 0.8 µm or more and 25 µm or less, may be 1 µm or more and 20 µm or less, and may be 2 µm or more and 15 µm or less. Also, the shape of the aggregate is, for example, a granular shape.

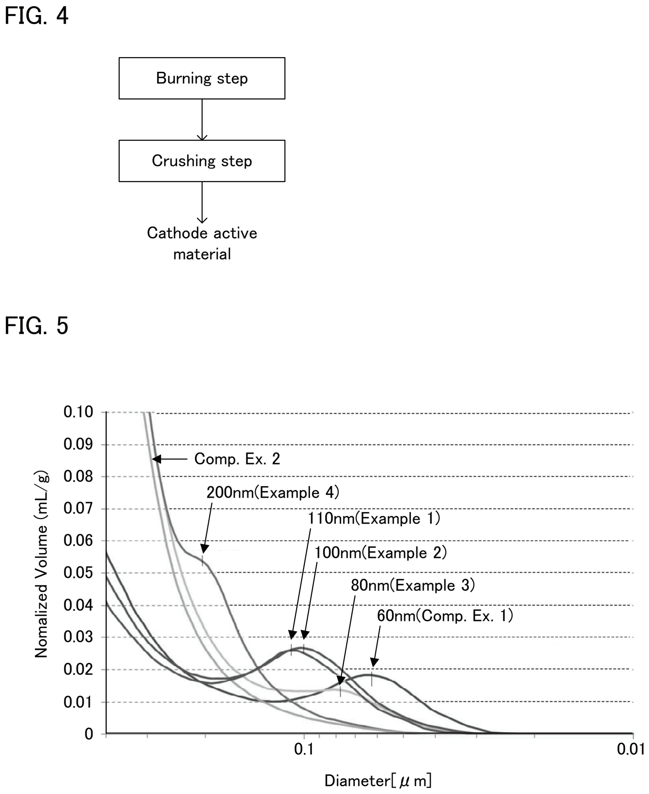

When a pore diameter distribution by a mercury press-in method is performed to the cathode active material in the present disclosure, a peak is present in a range of 65 nm or more and 300 nm or less. The peak includes a inflection point (for example, Example 4 in FIG. 5). The peak may be present in a range of 75 nm or more and 220 nm or less, may be present in a range of 80 nm or more and 200 nm or less, may be present in a range of 85 nm or more and 180 nm or less, and may be present in a range of 90 nm or more and 150 nm or less.

The pore amount in the peak is, for example, 0.010 mL/g or more, may be 0.015 mL/g or more, may be 0.020 mL/g or more, may be 0.025 mL/g or more, and may be 0.045 mL/g or more. Meanwhile, the pore amount in the peak is, for example, 0.100 mL/g or less, may be 0.090 mL/g or less, may be 0.080 mL/g or less, and may be 0.060 mL/g or less. Also, in the pore diameter distribution, an extremely small point (a point in a shape of convex upside down) may be present in a range of 100 nm or more and 300 nm or less. The extremely small point may be present in a range of 150 nm or more and 300 nm or less, and may be present in a range of 150 nm or more and 250 nm or less.

### 3. Cathode active material

The cathode active material in the present disclosure includes a crystalline primary particle containing Li, TM, which is a transition metal, and O. Also, the cathode active material is an aggregate configured by a plurality of the primary particle. The cathode active material is usually used for a battery. Also, there are no particular limitations on the method for producing the cathode active material, and examples thereof may include the method described in "D. Method for producing cathode active material" later.

The present disclosure can also provide a cathode active material powder including: a plurality of crystalline primary particle containing Li, TM, which is a transition metal, and 0, as a cathode active material, wherein at least a part of the plurality of primary particle configures an aggregate; an average particle size of the primary particle in the aggregate is 0.5 µm or more; and in a pore diameter distribution of the aggregate obtained by a mercury press-in method, a peak is present in a range of 65 nm or more and 300 nm or less. A part of the plurality of primary particle may configure a single crystalline active material. Also, the rate of the aggregate to all the cathode active materials in the cathode active material powder is, for example, 5 mass% or more, may be 10 mass% or more, may be 20 mass% or more, may be 30 mass% or more, may be 40 mass% or more, may be 50 mass% or more, may be 60 mass% or more, and may be 70 mass% or more.

### B. Cathode mixture

The cathode mixture in the present disclosure contains the above described cathode active material.

According to the present disclosure, the above described cathode active material is used, and thus a cathode mixture capable of suppressing the increase in resistance due to charge and discharge may be achieved. The cathode mixture may contain other materials (such as a conductive material and a binder) in addition to the cathode active material. Also, the cathode mixture may contain the above described cathode active material powder. Also, the cathode mixture may be in a powder shape, and may be in a slurry shape containing a dispersion medium.

The rate of the cathode active material in a solid content of the cathode mixture is, for example, 20 mass% or more, may be 30 mass% or more and may be 40 mass% or more. If the rate of the cathode active material is too little, there is a possibility that sufficient energy density may not be obtained. Meanwhile, the rate of the cathode active material in the solid content of the cathode mixture is, for example, 95 mass% or less, may be 70 mass% or less and may be 60 mass% or less. If the rate of the cathode active material is too much, there is a possibility that the ion conductivity and the electron conductivity may be relatively degraded.

The cathode mixture may contain a conductive material. By adding the conductive material, electron conductivity improves. Examples of the conductive material may include a carbon-based material, a metal particle, and a conductive polymer. Examples of the carbon-based conductive material may include a particulate carbon material such as acetylene black (AB) and Ketjen black (KB), and a fiber carbon material such as vapor grown carbon fiber (VGCF), carbon nanotube (CNT), and carbon nanofiber (CNF).

The rate of the conductive material in the solid content of the cathode mixture is, for example, 0.1 mass% or more. If the rate of the conductive material is too little, there is a possibility that the electron conduction path may be insufficient. Meanwhile, the rate of the conductive material in the solid content of the cathode mixture is, for example, 5 mass% or less. If the rate of the conductive material is too much, the rate of the cathode active material would be relatively little, and there is a possibility the energy density may decrease.

The cathode mixture may contain a binder. By adding the binder, the cathode active material layer in which the cathode active material does not easily fall off can be obtained. Examples of the binder may include a rubber-based binder such as styrene butadiene rubber (SBR), and butadiene rubber (BR); a polycarbonate-based binder such as carboxymethylcellulose; and a fluoride-based binder such as polyvinylidene fluoride (PVdF).

The rate of the binder in the solid content of the cathode mixture is, for example, 0.5 mass% or more. If the rate of the binder is too little, there is a possibility that the falling off of the cathode active material may not be sufficiently inhibited. Meanwhile, the rate of the binder in the solid content of the cathode mixture is, for example, 15 mass% or less. If the rate of the binder is too much, the rate of the cathode active material would be relatively little, and there is a possibility the energy density may decrease.

### C. Battery

FIG. 3 is a schematic cross-sectional view exemplifying the battery in the present disclosure. Battery 20 shown in FIG. 3 includes cathode active material layer 11, anode active material layer 12, electrolyte layer 13 arranged between the cathode active material layer 11 and the anode active material layer 12, cathode current collector 14 for collecting currents of the cathode active material layer 11, and anode current collector 15 for collecting currents of the anode active material layer 12. In the present disclosure, the cathode active material layer 11 contains the cathode mixture described in "B. Cathode mixture" above.

According to the present disclosure, by using the above described cathode mixture, a battery capable of suppressing the increase in resistance due to charge and discharge may be achieved.

### 1. Cathode active material layer

The cathode active material layer contains at least a cathode active material. Also, the cathode active material layer may contain a conductive material and a binder. The cathode active material, the conductive material, and the binder are in the same contents as those described in "A. Cathode active material" above and "B. Cathode mixture" above.

The cathode active material layer may contain an electrolyte. The electrolyte is, for example, the later described liquid electrolyte. Meanwhile, the cathode active material layer may contain a solid electrolyte. The thickness of the cathode active material layer is, for example, 0.1 µm or more and 1000 µm or less, may be 1 µm or more and 500 µm or less, and may be 30 µm or more and 100 µm or less.

There are no particular limitations on the method for producing the cathode active material layer, and examples thereof may include a method in which a cathode slurry containing a cathode active material and a dispersion medium is applied on the cathode current collector and dried. Pressing treatment may be performed to the cathode active material layer after drying. By the pressing treatment, density of the cathode active material layer improves.

### 2. Anode active material layer

The anode active material layer contains at least an anode active material. Examples of the anode active material may include a carbon-based active material, a Li-based active material, a Si-based active material, and an oxide-based active material.

Examples of the carbon-based active material may include graphite, soft carbon, and hard carbon. The graphite may be a natural graphite, and may be an artificial graphite. Examples of the Li-based active material may include Li and a Li alloy. Examples of the Li alloy may include a Li-Si alloy. Examples of the Si-based active material may include Si, a SiC composite active material, a Si alloy and a Si oxide. Examples of the SiC composite active material may include an active material in which a carbon carrier is supported by Si or a Si alloy. examples of the oxide-based active material may include a lithium titanate such as Li₄Ti₅O₁₂.

The rate of the anode active material in the anode active material layer is, for example, 20 mass% or more, may be 30 mass% or more and may be 40 mass% or more. If the rate of the anode active material is too little, there is a possibility that sufficient energy density may not be obtained. Meanwhile, the rate of the anode active material in the anode active material layer is, for example, 95 mass% or less, may be 70 mass% or less and may be 60 mass% or less. If the rate of the anode active material is too much, there is a possibility that the ion conductivity and the electron conductivity in the anode active material layer may be relatively degraded.

The anode active material layer may contain at least one of a conductive material, a binder, and an electrolyte. The details of the conductive material, the binder, and the electrolyte are in the same contents as those described in "1. Cathode active material layer" above. Also, the thickness of the anode active material layer is, for example, 0.1 µm or more and 1000 µm or less, may be 1 µm or more and 500 µm or less, and may be 30 µm or more and 100 µm or less.

There are not particular limitations on the method for producing the anode active material layer, and examples thereof may include a method in which an anode slurry containing an anode active material and a dispersion medium is applied on the anode current collector and dried. Pressing treatment may be performed to the anode active material layer after drying. By the pressing treatment, density of the anode active material layer improves.

### 3. Electrolyte layer

The electrolyte layer is a layer arranged between the cathode active material layer and the anode active material layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as LiPF₆, LiBF₄, LiClO₄ and LiAsF₆; and an organic lithium salt such as LiCF₃SO₃, LiN(SO₂CF₃)₂, LiN(SO₂C₂F₅)₂, and LiC(SO₂CF₃)₃.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl methyl carbonate (EMC). The non-aqueous solvent may be a mixture of cyclic carbonate having high dielectric constant and high viscosity such as EC and PC with chain carbonate having low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based electrolyte such as lithiumbis(fluorosulfonil)imide, and lithiumbis(trifluoromethanesulfonil)imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic solid electrolyte such as a polymer electrolyte and a gel electrolyte; and an inorganic solid electrolyte such as a sulfide solid electrolyte, an oxide solid electrolyte, and a halide solid electrolyte.

### 4. Battery

The battery in the present disclosure preferably includes a cathode current collector for collecting currents of the cathode active material layer, and an anode current collector for collecting currents of the anode active material layer. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing a power generation elements (the cathode active material layer, the electrolyte layer, and the anode active material layer). Examples of the outer package may include a case type outer package and a laminate type outer package.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

### D. Method for producing cathode active material

FIG. 4 is a flow chart exemplifying the method for producing the cathode active material in the present disclosure. In FIG. 4, first, a mixture containing a transition metal hydroxide containing TM, a Li source, and lithium hydroxide that is a molten salt, is burned to obtain a burned substance (a burning step). Next, the burned substance is crushed (a crushing step). In the mixture, a molar ratio of Li in the molten salt to the TM is 0.1 or more and less than 0.6.

According to the present disclosure, the mixture containing the molten salt is used, and the specified crushing treatment is performed, and thus a cathode active material capable of suppressing the increase in resistance due to charge and discharge can be obtained. The molten salt works as a flux, and promotes the growth of the primary particle.

### 1. Burning step

The burning step is a step of burning a mixture containing a transition metal hydroxide containing the TM, a Li source, and lithium hydroxide that is a molten salt, to obtain a burned substance.

The transition metal hydroxide contains a TM, which is a transition metal. The transition metal hydroxide corresponds to a precursor of the cathode active material. The transition metal hydroxide typically does not contain Li, but may contain Li.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include NiSo₄, and Ni(NO₃)₂. Examples of the Co source may include CoSO₄, Co(NO₃)₂, and Co(NO₃)₃. Examples of the Mn source may include MnSO₄, and Mn(NO₃)₂. The composition of the raw material aqueous solution is appropriately adjusted in accordance with the intended cathode active material.

Next, a sodium hydroxide aqueous solution is added to a reaction container, and the raw material aqueous solution and NH₃ aqueous solution are dropped thereto while maintaining the pH alkaline (such as pH 11.3 to 12.0). The reaction temperature is not particularly limited, but for example, it is 50°C or more and 65°C or less. After the reaction completed, it is preferable to take out the transition metal hydroxide by filtrating, and to dry it after washing with water.

In the burning step, a mixture containing a transition metal hydroxide, a Li source, and lithium hydroxide that is a molten salt, is produced. Examples of the Li source may include lithium hydroxide, lithium carbonate, lithium nitrate, lithium acetate, lithium oxide, and lithium chloride. The Li source may be lithium hydroxide, and may be a Li-containing compound other than the lithium hydroxide. The molar ratio of Li in the Li source to the TM included in the transition metal hydroxide is, for example, 0.8 or more and 1.2 or less, may be 0.9 or more and 1.1 or less, and may be 1.0.

The mixture usually contains a lithium hydroxide that is a molten salt. The molar ratio (Li/TM) of Li included in the molten salt to the TM included in the transition metal hydroxide is usually 0.1 or more and less than 0.6. The Li/TM may be 0.15 or more, may be 0.2 or more, and may be 0.25 or more. Meanwhile, the Li/TM may be 0.55 or less, and may be 0.5 or less.

The mixture may contain a lithium hydroxide as the Li source and the molten salt. The molar ratio (Li'/TM) of Li included in the Li source and the molten salt to the TM included in the transition metal hydroxide is, for example, 1.1 or more, may be 1.15 or more, and may be 1.2 or more. Meanwhile, the Li'/TM is, for example, less than 1.6, may be 1.55 or less, and may be 1.5 or less.

In the burning step, the mixture is burned to obtain a burned substance. The burning temperature in the burning step is, for example, 650°C or more, may be 700°C or more, and may be 750°C or more. When the burning temperature is too low, it is difficult to sufficiently grow the primary particle. Meanwhile, the burning temperature is, for example, 1100°C or less, may be 1000°C or less, and may be 950°C or less. When the burning temperature is too high, side reactions easily occur.

The burning time in the burning step is not particularly limited, and for example, it is 5 hours or more, may be 7 hours or more, and may be 9 hours or more. Meanwhile, burning time in the burning step is, for example, 15 hours or less, and may be 13 hours or less. The atmosphere in the burning step is usually an atmosphere wherein oxygen is present. Examples of the burning method in the burning step may include a method using a burning furnace such as a muffle furnace and an electric furnace.

### 2. Crushing step

The crushing step is a step of crushing the burned substance. Examples of the method for crushing the burned substance may include hammer milling, lab milling, and ball milling. Also, the crushing step is adjusted so as to obtain the cathode active material described in "A. Cathode active material" above.

### 3. Other steps

The method for producing the cathode active material in the present disclosure may or may not include a re-burning step of re-burning the burned substance between the burning step and the crushing step. Re-burning allows the particle size of the primary particle to grow further, and thereby the pore diameter distribution can be controlled.

The burning temperature in the re-burning step is preferably lower than the burning temperature in the burning step described above. The burning temperature in the re-burning step is, for example, 400°C or more and 600°C or less, and may be 450°C or more and 550°C or less. The burning time in the re-burning step is preferably shorter than the burning time in the burning step described above. The burning time in the re-burning step is, for example, 1 hour or more and 5 hours or less, and may be 2 hours or more and 4 hours or less. The atmosphere in the re-burning step is usually an atmosphere wherein oxygen is present. Examples of the burning method in the re-burning step may include a method using a burning furnace such as a muffle furnace and an electric furnace.

The method for producing the cathode active material in the present disclosure may or may not include a granulating step of granulating the crushed product of the burned substance after the crushing step. By granulating, a large aggregate can be obtained, and thereby the pore diameter distribution can be controlled. Examples of the method for granulating the crushed product of the burned substance may include a spray-dry method. In the spray-dry method, for example, the crushed product of the burned substance is dispersed in water, and the dispersed liquid is sprayed using a spray-dry device. The heating temperature of the spray-dry device is, for example, 150°C or more and 250°C or less.

### 4. Cathode active material

The cathode active material obtained by the above described each steps is in the same contents as those described in "A. Cathode active material" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Example 1]

### <Preparation of raw material aqueous solution>

First, NiSO₄, CoSO₄, and MnSO₄ were dissolved in an ion exchanged water to prepare a raw material aqueous solution. The ratio (molar ratio) of Ni, Co, and Mn in the raw material aqueous solution was adjusted to be Ni : Co : Mn = 92 : 5 : 3. The concentration (molar number of raw materials (all solutes) to the raw material aqueous solution) of the raw material aqueous solution was 0.2 mol%.

### <Deposition and temporary burning>

In a reaction container, fixed amount of NH₃ aqueous solution was put in, and substituted with nitrogen by stirring with a stirrer. In the reaction container, NaOH was added to adjust the pH of the aqueous solution to alkali. The pH in the reaction container was maintained to be constant, and the raw material aqueous solution was dropped while controlling the temperature to deposit a transition metal hydroxide. After the deposition reaction completed, dehydration and temporary burning were performed to the deposit in the below temperature and pressure conditions.
- Temperature : 120°C
- Time: 8 hours
- Pressure: 0.2 MPa

### <Collection of precursor>

The deposit was washed with water after the temporary burning. The deposit washed with water was filtrated to take out the transition metal hydroxide. Next, the product was dried at 110°C for 12 hours to evaporate moisture (dried product). Thereby, a precursor was prepared.

### <Mixture of Li raw material and molten salt>

The obtained precursor (transition metal hydroxide) and LiOH as a Li source were mixed with a mortar. LiOH as the Li source was mixed so that a ratio (molar ratio) of Li included in the Li source to the total amount of the transition metal kind (Ni, Co, Mn) included in the transition metal hydroxide became 1.0. Further, LiOH as a molten salt was mixed so that the ratio (molar ratio) of Li included in the molten salt to the total amount of the transition metal kind included in the transition metal hydroxide became 0.2. Thereby, at the time of burning, the presence of excessive LiOH promotes the single crystallization of the primary particle.

### <Burning>

A heat treatment (burning) was performed to the mixture. Burning was performed in a muffle furnace at 780°C for 12 hours (burning step). Next, the burned substance was crushed with an agate mortar to the particle size of 0.2 mm or less, and then dispersed in a pure water of 500 mL and stirred hard for one minute to obtain a slurry. The slurry was filtrated with a buchner funnel and a filter paper, rinsed with pure water of 500 mL, and the obtained cake was vacuum dried at 90°C. The obtained dry powder was burned under oxygen flow at 500°C for 3 hours (re-burning). The burned substance was crushed by hammer milling, and cracked to the specified particle size (crushing). Thereby, a cathode active material was obtained.

### <Production of cathode>

A cathode mixture paste including the above particle as the cathode active material, and N-methyl pyrrolidone (NMP) as a solvent was applied on a metal foil that is a cathode current collector, using a film applicator with film thickness adjusting function (from Allgood Corporation). After that, a drying treatment was performed on a hotplate at 80°C for 5 minutes to let out the NMP, and thereby a cathode active material layer was formed on the cathode current collector. Thereby, a cathode including a cathode current collector and a cathode active material layer was obtained.

### <Production of battery>

An anode mixture paste including a natural graphite that is an anode active material was applied on a surface of a metal foil that is an anode current collector using a film applicator with film thickness adjusting function (from Allgood Corporation). After that, the product was dried by a dryer at 80°C for 5 minutes, and an anode including an anode active material layer on the anode current collector was produced. LiPF₆ solution of 1 M containing LiPF₆ as an electrolyte, and ethylene carbonate (EC), dimethyl carbonate (DMC), and ethyl methyl carbonate (EMC) as a solvent in a ratio of EC/DMC/EMC = 3/4/3 vol%, was prepared as a liquid electrolyte. The cathode, a separator, and the anode were layered, the separator was impregnated with the liquid electrolyte, and a battery (small size laminate cell) in which power generating elements were stored in a pouch made of an Al laminate film, was produced.

### [Example 2]

A cathode active material was obtained in the same manner as in Example 1 except that re-burning was not performed. A battery was obtained in the same manner as in Example 1 except that the obtained cathode active material was used.

### [Example 3]

A cathode active material was obtained in the same manner as in Example 1, except that LiOH as a molten salt was mixed so that the ratio (molar ratio) of Li included in the molten salt to the total amount of the transition metal kind included in the transition metal hydroxide became 0.1. A battery was obtained in the same manner as in Example 1 except that the obtained cathode active material was used.

### [Example 4]

A burned substance was obtained in the same manner as in Example 1, except that LiOH as a molten salt was mixed so that the ratio (molar ratio) of Li included in the molten salt to the total amount of the transition metal kind included in the transition metal hydroxide became 0.6. The obtained burned substance was crushed by hammer milling, and cracked to the specified particle size (crushing). After that, 30 g of the crushed product was dispersed in pure water of 100 mL, and sprayed at 200°C by a spray-dry device from BUCHI to obtain a cathode active material that was a granulated body. A battery was obtained in the same manner as in Example 1 except that the obtained cathode active material was used.

### [Comparative Example 1]

A cathode active material was obtained in the same manner as in Example 1 except that the molten salt was not used and the burning temperature was changed to 730°C A battery was obtained in the same manner as in Example 1 except that the obtained cathode active material was used.

### [Comparative Example 2]

A cathode active material was obtained in the same manner as in Example 1, except that LiOH as a molten salt was mixed so that the ratio (molar ratio) of Li included in the molten salt to the total amount of the transition metal kind included in the transition metal hydroxide became 0.6. A battery was obtained in the same manner as in Example 1 except that the obtained cathode active material was used.

### [Evaluation]

### <XRD measurement>

An X-ray diffraction (XRD) measurement using CuKα ray was respectively conducted to the cathode active materials obtained in Examples 1 to 4 and Comparative Examples 1 and 2. As a result, it was confirmed that all the cathode active materials obtained in Examples 1 to 4 and Comparative Examples 1 and 2 had the layered rock salt type crystal phase belonging to the space group R-3m. In other words, it was confirmed that the primary particle containing Ni, Co, and Mn included the layered rock salt type crystal phase.

### <SEM observation>

The cross-sections of the cathode active materials obtained in Examples 1 to 4 and Comparative Examples 1 and 2 were observed by a scanning electron microscope (SEM). As a result, it was confirmed that the cathode active materials obtained in Examples 1 to 4 and Comparative Example 1 were respectively an aggregate in which a plurality of the primary particles aggregated. To the contrary, it was confirmed that the cathode active material obtained in Comparative Example 2 was a single crystalline cathode active material, since the primary particle was solely present. Also, the particle sizes of the primary particles in the aggregates obtained in Examples 1 and 4 were respectively 8.2 µm, 7.9 µm, 2.3 µm, and 1.5 µm.

### <Pore diameter distribution measurement>

The pore diameter distribution measurement by a mercury press-in method was performed to the cathode active materials obtained in Examples 1 to 4 and Comparative Examples 1 and 2. In specific, the pore diameter distribution of the cathode active material was respectively measured by injecting mercury to a sample tube in which 1 g of the cathode active material was sealed, using a mercury press-in type pore distribution measurement device from Micromeritics. The results are shown in FIG. 5.

As shown in FIG. 5, it was confirmed that the cathode active materials obtained in Examples 1 to 4 and Comparative Example 1 respectively had one peak in the range where the pore diameter was 300 nm or less. Meanwhile, a peak was not confirmed in the range where the pore diameter was 300 nm or less, in the cathode active material obtained in Comparative Example 2. The peak positions and the pore amounts are shown in Table 1.

### <Resistance increase measurement>

The resistance increase before and after the cycle test was measured using the batteries obtained in Examples 1 to 4 and Comparative Examples 1 and 2. First, the initial resistance of the battery was respectively obtained. In specific, the batteries were charged until 4.25 V, and then discharged until 3.7 V. After that, the voltage drop (V) and current (I) when discharged at 25°C for 0.1 seconds were measured to obtain the initial resistance (IV resistance).

Next, a cycle test in the below conditions was performed.
- Surrounding temperature : 60°C
- Cycle number: 100
- Current rate: 0.3 C
- Voltage range: from 4.25 V to 2.5 V

After the cycle test, the resistance (IV resistance) after 100 cycles was obtained in the same manner as the above. The difference between the resistance after 100 cycles and the initial resistance was obtained as a resistance increase (Ω). The results are shown in Table 1.

### <Capacity durability measurement>

The capacity durability was measured using the batteries obtained in Examples 1 to 4 and Comparative Examples 1 and 2. First, the initial discharge capacity of the battery was respectively obtained. In specific, the batteries were charged until 4.25 V, discharged at 0.1 C until 2.5 V, and the initial discharge capacity was obtained at 25°C.

Next, a cycle test in the below conditions was performed.
- Surrounding temperature : 60°C
- Cycle number: 100
- Current rate: 0.3 C
- Voltage range: from 4.25 V to 2.5 V

After the cycle test, the discharge capacity after 100 cycles was obtained in the same manner as the above. The capacity durability was respectively obtained by dividing the discharge capacity after 100 cycles by the initial discharge capacity. The results are shown in Table 1.

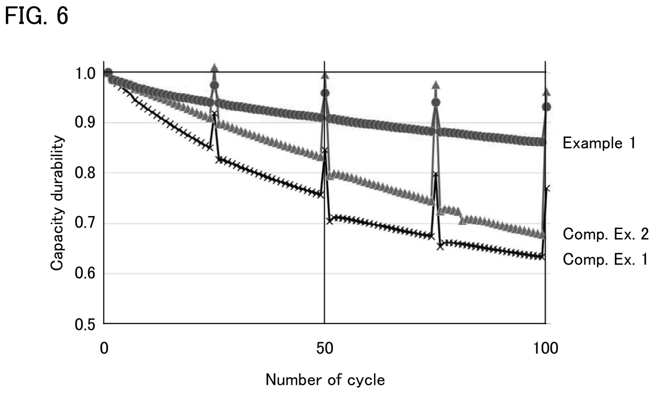

Also, the change in capacity durability of the batteries obtained in Example 1 and Comparative Examples 1 and 2 are shown in FIG. 6. In FIG. 6, capacity was confirmed per 25 cycles at 60°C and 0.2 C of CCCV, and CC charge and discharge were performed in the other cycles at 60°C and 0.3 C. Incidentally, the numerical values of the capacity durability in Table 1 and the capacity durability shown in FIG. 6 do not match because the measurement temperature differs from each other.

**[Table 1]**

| | Peak position in 0nm-300nm (nm) | Pore amount in the peak position (mL/g) | Resistance increase (Ω) | Capacity durability (%) |
|---|---|---|---|---|
| Example 1 | 110 | 0.027 | 1.6 | 88 |
| Example 2 | 100 | 0.027 | 3.0 | 72 |
| Example 3 | 80 | 0.014 | 3.0 | 65 |
| Example 4 | 200 | 0.052 | 2.7 | 77 |
| Comp. Ex. 1 | 60 | 0.018 | 3.8 | 54 |
| Comp. Ex. 2 | - | - | 4.6 | 66 |

As shown in Table 1, it was confirmed that the increase in resistance due to charge and discharge was suppressed in Examples 1 to 4 compared to Comparative Examples 1 and 2. Also, the capacity durability of Examples 1 to 4 was respectively equal to or more than that of Comparative Examples 1 and 2. Also, as shown in FIG. 6, the capacity durability of Comparative Example 2 (single crystal) was better than that of Comparative Example 1 (polycrystal). Further, remarkable effect that the capacity durability of Example 1 (aggregate) was better than that of Comparative Example 2 (single crystal) was obtained.

### Reference Sings List

- 1: primary particle
- 10: cathode active material
- 11: cathode active material layer
- 12: anode active material layer
- 13: electrolyte layer
- 14: cathode current collector
- 15: anode current collector
- 20: battery

## Claims

1. A cathode active material **characterized by** comprising:
a crystalline primary particle containing Li, TM, which is a transition metal, and O, wherein
the cathode active material is an aggregate configured by a plurality of the primary particle;
an average particle size of the primary particle in the aggregate is 0.5 µm or more; and
in a pore diameter distribution obtained by a mercury press-in method, a peak is present in a range of 65 nm or more and 300 nm or less.

2. The cathode active material according to claim 1, **characterized in that** the peak is present in a range of 80 nm or more and 200 nm or less in the pore diameter distribution.

3. The cathode active material according to claim 1, **characterized in that** a pore amount in the peak is 0.010 mL/g or more.

4. The cathode active material according to claim 1, **characterized in that** a pore amount in the peak is 0.025 mL/g or more.

5. The cathode active material according to claim 1, **characterized in that** the primary particle includes at least Ni as the TM.

6. The cathode active material according to claim 5, **characterized in that**, when the TM is 1 part by mol, a ratio of the Ni is 0.50 parts by mol or more.

7. The cathode active material according to claim 5, **characterized in that**, when the TM is 1 part by mol, a ratio of the Ni is 0.90 parts by mol or more.

8. The cathode active material according to claim 1, **characterized in that** the primary particle contains at least one kind of Co and Mn as the TM.

9. The cathode active material according to claim 1, **characterized in that** the primary particle includes a layered rock salt type crystal structure.

10. A cathode mixture **characterized by** comprising the cathode active material according to any one of claims 1 to 9.

11. A battery comprising a cathode active material layer containing a cathode active material, an anode active material layer containing an anode active material, and an electrolyte layer arranged between the cathode active material layer and the anode active material layer, **characterized in that**
the cathode active material layer contains the cathode mixture according to claim 10.

12. A method for producing the cathode active material according to any one of claims 1 to 9, the method **characterized by** comprising:
a burning step of burning a mixture containing a transition metal hydroxide containing the TM, a Li source, and lithium hydroxide that is a molten salt, to obtain a burned substance, and
a crushing step of crushing the burned substance, wherein
in the mixture, a molar ratio of Li in the molten salt to the TM is 0.1 or more and less than 0.6.

13. The method for producing the cathode active material according to claim 12, **characterized in that**
the Li source is lithium hydroxide; and
a molar ratio of Li in the Li source to the TM in the mixture is 1.0.

14. The method for producing the cathode active material according to claim 12, **characterized by** further comprising a granulating step of granulating a crushed product of the burned substance after the crushing step.
